# EUROPEAN PATENT APPLICATION

(11) **EP 4 503 194 A1**
(43) Date of publication of application: **05.02.2025**
(21) Application number: 22934063.3
(22) Date of filing: 30.03.2022
(51) Int. Cl.: H01M 4/62, H01M 4/13

(54) **BINDER, NEGATIVE POLE PIECE, ELECTROCHEMICAL DEVICE AND ELECTRONIC DEVICE**

(71) Applicant: Ningde Amperex Technology Limited, Ningde, Fujian 352100 (CN)
(72) Inventor: CHENG, Baoxiao, Ningde, Fujian 352100 (CN)
(74) Representative: Icosa
(86) International application number: PCT/CN2022/083967
(87) International publication number: WO 2023/184209

(57) **Abstract**

Provided are a binder, a negative electrode plate, an electrochemical apparatus, and an electronic apparatus. The binder comprises a copolymer. The copolymer is obtained by copolymerization of a mixture comprising a first monomer of butadiene, a second monomer of styrene, a third monomer, a crosslinking monomer, and an emulsifier; the third monomer comprises at least one of (meth)acrylate, acrylonitrile, acrylic acid, a derivative of (meth)acrylate, a derivative of acrylonitrile or a derivative of acrylic acid; and the crosslinking monomer comprises at least one of triethyleneglycol diacrylate, N, N-methylenebisacrylamide, ethylene glycol diacrylate, or ethylene glycol dimethacrylate. Applying the binder provided in this application to a negative electrode plate can improve the structural stability of the negative electrode plate, thereby improving the cycle performance and expansion performance of an electrochemical apparatus.

## Description

### TECHNICAL FIELD

This application relates to the field of electrochemical technologies, in particular to a binder, a negative electrode plate, an electrochemical apparatus, and an electronic apparatus.

### BACKGROUND

A lithium ion battery (electrochemical apparatus) has many advantages such as a large volume and mass energy density, long cycle life, high nominal voltage, low self-discharge rate, small volume and light weight, and has wide application in the field of consumer electronics. With the rapid development of electric vehicles and mobile electronic devices in recent years, people have higher and higher requirements of lithium ion batteries on safety performance, cycle performance, etc., and expect the emergence of new lithium ion batteries with comprehensive performance enhancement.

Generally, a coating method is used to prepare a negative electrode active material layer on a negative electrode plate of a lithium ion battery. During a film forming process, a binder in the negative electrode active material layer has the disadvantages of poor dynamic and non-uniform film forming distribution (easy to have agglomeration and clustered distribution during film forming on the surface of the negative electrode active material particles), which is not conducive to the cycle performance and expansion performance of the lithium ion battery.

### SUMMARY

The objective of this application is to provide a binder, a negative electrode plate, an electrochemical apparatus and an electronic apparatus, so as to improve the cycle performance and the expansion performance of the electrochemical apparatus. The specific technical solution is as follows:
a first aspect of this application provides a binder, including a copolymer, in which the copolymer is obtained by copolymerization of a mixture including a first monomer of butadiene, a second monomer of styrene, a third monomer, a crosslinking monomer, and an emulsifier; the third monomer includes at least one of (meth)acrylate, acrylonitrile, acrylic acid, a derivative of (meth)acrylate, a derivative of acrylonitrile or a derivative of acrylic acid; and the crosslinking monomer includes at least one of triethyleneglycol diacrylate, N, N-methylenebisacrylamide, ethylene glycol diacrylate, or ethylene glycol dimethacrylate. The first monomer and the second monomer serve as a main structure of the binder, the first monomer provides high toughness for the binder, the second monomer provides high strength and a high glass transition temperature (Tg) for the binder, and the third monomer provides hydrophilicity for the binder, improving the dispersibility of binder emulsion particles, and facilitating the discrete distribution of a film on the surface of a negative electrode active material, the crosslinking monomer provides a crosslinking structure, which can improve Tg of the binder, and reduce migration film formation of molecular chains, and the emulsifier provides a high binding strength. The binder provided in this application is distributed discretely when a film is formed on the surface of the negative electrode active material, is evenly dispersed, and has a high binding strength. Applying the binder to a negative electrode plate can improve the structural stability of the negative electrode plate, thereby improving the cycle performance and expansion performance of an electrochemical apparatus.

In one embodiment of this application, the mass ratio of the first monomer, the second monomer, and the third monomer is (15% to 35%):(60% to 85%):(0% to 15%); and on the basis of the total mass of the first monomer, the second monomer, and the third monomer, the mass percentage of the crosslinking monomer is 0.5% to 3%. The content of the monomers for preparing the copolymer in the described ranges is beneficial for improving the dispersity and binding strength of the binder.

In one embodiment of this application, the emulsifier includes at least one of dehydrated sorbitan monooleate, sorbitan monooleate, a dichlorinated-N, N'-bis(3-abietanoyloxy-2-hydroxypropyl)tetraethylene glycol bis(2-hydroxypropylamine), an alkoxylated alcohol, or a fatty acid polyol ester. Selecting an emulsifier within the described range and polar groups (such as hydroxyl and cyano) in the emulsifier can provide a strong binding strength after film formation, and the emulsion gelatine has a good dispersity, which can further improve the dispersity and binding strength of the binder.

In one embodiment of this application, the mass percentage of the emulsifier is 0.5% to 2% on the basis of the total mass of the first monomer, the second monomer, and the third monomer. The content of the emulsifier is within the described range, which is beneficial for improving the dispersity and binding strength of the binder.

In one embodiment of this application, the binder satisfies at least one of the following characteristics 1) to 6): 1) the binder has a glass transition temperature of 10°C to 70°C; 2) the binder has a crosslinking degree of 10% to 80%; 3) the binder has a swelling degree of 30% to 150% in an electrolytic solution; 4) the binder is distributed discretely in a negative electrode plate, and the average diameter of each point in the discrete distribution is 100 nm to 300 nm; 5) the tensile strength of a binder film of the binder is 5 MPa to 30 MPa; and 6) the elongation at break of the binder film of the binder is 50% to 300%. The binder satisfies any one of the described characteristics 1) to 6). Applying the binder to a negative electrode plate can improve the structural stability of the negative electrode plate, and is beneficial for improving the cycle performance and expansion performance of an electrochemical apparatus.

A second aspect of this application provides a negative electrode plate, including a negative electrode current collector and a negative electrode active material layer provided on at least one surface of the negative electrode current collector, in which the negative electrode active material layer includes a negative electrode active material and a binder provided in the first aspect of this application. The negative electrode plate provided in this application includes the binder provided in the first aspect of this application, and has good structural stability, thereby improving the cycle performance and expansion performance of an electrochemical apparatus.

In one embodiment of this application, the mass percentage of the binder is 1% to 10% on the basis of the mass of the negative electrode active material layer. The content of the binder is within the described range, which is beneficial for improving the structural stability of the negative electrode plate.

In one embodiment of this application, the negative electrode active material includes at least one of graphite, hard carbon, silicon, silicon carbon, or silicon oxide. By selecting the described negative electrode active material, the obtained negative electrode plate has good structural stability, thereby improving the cycle performance and expansion performance of the electrochemical apparatus.

In one embodiment of this application, the compaction density of the negative electrode active material layer is 1.45 g/cm³ to 1.85 g/cm³. The compaction density of the negative electrode active material layer is within the described range, which is beneficial for improving the structural stability of the negative electrode plate, thereby improving the cycle performance and expansion performance of the electrochemical apparatus.

In one embodiment of this application, the negative electrode plate satisfies at least one of the following characteristics a) and b): a) the ionic resistance of the negative electrode plate is 4 mΩ to 20 mΩ; and b) a binding strength of the negative electrode active material layer is 10 N/m to 200 N/m. The smaller the ionic resistance of the negative electrode plate is, the larger the charging ratio of the electrochemical apparatus is, and the faster the charging rate is. The ionic resistance of the negative electrode plate provided in this application is within the range of characteristic a), which is beneficial for improving the charging rate of the electrochemical apparatus. The binding strength of the negative electrode active material layer is within the range of characteristic b), which is beneficial for improving the cycle performance and expansion performance of the electrochemical apparatus.

A third aspect of this application provides an electrochemical apparatus, including the negative electrode plate provided in the second aspect of this application. The negative electrode plate provided in this application has good structural stability, so that the electrochemical apparatus provided in this application has good cycle performance and expansion performance.

A fourth aspect of this application provides an electronic apparatus, including the electrochemical apparatus provided in the third aspect of this application. The electrochemical apparatus provided in this application has good cycle performance and expansion performance, and thus the electronic apparatus provided in this application has good cycle performance and expansion performance.

This application provides a binder, a negative electrode plate, an electrochemical apparatus, and an electronic apparatus. The binder includes a copolymer obtained by copolymerization of a mixture including a first monomer of butadiene, a second monomer of styrene, a third monomer, a crosslinking monomer, and an emulsifier; the third monomer includes at least one of (meth)acrylate, acrylonitrile, acrylic acid, a derivative of (meth)acrylate, a derivative of acrylonitrile or a derivative of acrylic acid; and the crosslinking monomer includes at least one of triethyleneglycol diacrylate, N, N-methylenebisacrylamide, ethylene glycol diacrylate, or ethylene glycol dimethacrylate. Applying the binder provided in the present application to a negative electrode plate can improve the structural stability of the negative electrode plate, thereby improving the cycle performance and expansion performance of an electrochemical apparatus.

### BRIEF DESCRIPTION OF THE DRAWINGS

To describe the embodiments of this application and the technical solutions in the prior art more clearly, the accompanying drawings required for describing the embodiments and the prior art are briefly introduced as follows. Apparently, the accompanying drawings in the following description show merely some embodiments of this application, and a person of ordinary skill in the art may still derive other drawings from these accompanying drawings.
Fig. 1 is a scanning electron microscope (SEM) picture of a conventional SBR binder distributed on a graphite surface; and
Fig. 2 is a SEM photo of the distribution of the binder prepared in embodiment 1-1 of this application on the graphite surface.

### DETAILED DESCRIPTION

In order to make the objective, technical solutions, and advantages of this application more comprehensible, this application is further described in detail with reference to the accompanying drawings and embodiments. Apparently, the described embodiments are only a part rather than all of the embodiments of this application. All other technical solutions obtained by a person of ordinary skill in the art on the basis of the embodiments of this application belong to the scope of protection of this application.

It should be noted that, in the specific examples of this application, a lithium ion battery is taken as an example of the electrochemical apparatus to explain this application, but the electrochemical apparatus of this application is not limited to the lithium ion battery.

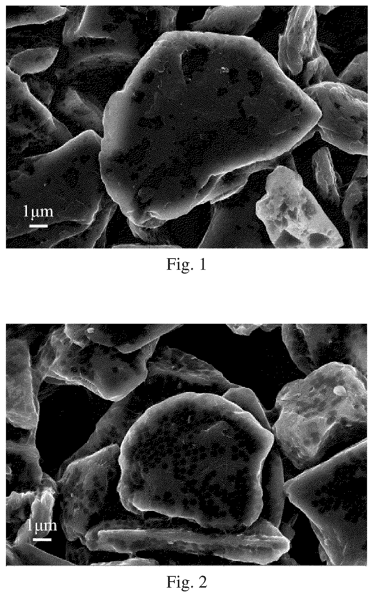

Currently, the most widely used emulsion binder (SBR) in negative electrode plates has the disadvantages of poor dynamic and non-uniform film forming distribution (easy to have agglomeration and clustered distribution during film forming), and an SEM picture of the distribution of a traditional SBR binder on the graphite surface is shown in Fig. 1.

In view of this, a first aspect of this application provides a binder, including a copolymer, in which the copolymer is obtained by copolymerization of a mixture including a first monomer of butadiene, a second monomer of styrene, a third monomer, a crosslinking monomer, and an emulsifier; the third monomer includes at least one of (meth)acrylate, acrylonitrile, acrylic acid, a derivative of (meth)acrylate, a derivative of acrylonitrile or a derivative of acrylic acid; and the crosslinking monomer includes at least one of triethyleneglycol diacrylate, N, N-methylenebisacrylamide, ethylene glycol diacrylate, or ethylene glycol dimethacrylate. The first monomer and the second monomer serve as a main structure of the binder, the first monomer provides high toughness for the binder, the second monomer provides high strength and a high glass transition temperature (Tg) for the binder, and the third monomer provides hydrophilicity for the binder, improving the dispersibility of binder emulsion particles, and facilitating the discrete distribution of a film, the crosslinking monomer provides a crosslinking structure, which can improve the Tg of the binder, and reduce migration film formation of molecular chains, and the emulsifier provides a high binding strength. The binder provided in this application is distributed discretely when a film is formed on the surface of the negative electrode active material, is evenly dispersed, and has a high binding strength. Applying the binder to a negative electrode plate can improve the structural stability of the negative electrode plate, thereby improving the cycle performance and expansion performance of an electrochemical apparatus.

In one embodiment of this application, the mass ratio of the first monomer, the second monomer and the third monomer is (15% to 35%):(60% to 85%):(0% to 15%); and on the basis of a total mass of the first monomer, the second monomer, and the third monomer, the mass percentage of the crosslinking monomer is 0.5% to 3%. The content of the monomers for preparing the copolymer in the described ranges is beneficial for improving the dispersity and binding strength of the binder.

In one embodiment of this application, the emulsifier includes at least one of dehydrated sorbitan monooleate (M-201), sorbitan monooleate (Span-80), a dichlorinated-N, N'-bis(3-abietanoyloxy-2-hydroxypropyl)tetraethylene glycol bis(2-hydroxypropylamine), an alkoxylated alcohol, or a fatty acid polyol ester. In this application, the alkoxylated alcohol includes, but is not limited to, diethylene glycol, dipropylene glycol, glycerol, pentaerythritol or sorbitol, etc. and the fatty acid polyol ester refers to an ester generated from substances such as alcohols having a hydroxyl number greater than or equal to 3 (for example, glycerol, polyglycerol, sorbitol and sorbitan) and sucrose and fatty acids, including, but not limited to, trimethylolpropane trifatty acid ester or pentaerythritol tetrafatty acid ester, etc. Selecting an emulsifier within the described range and polar groups (such as hydroxyl and cyano) in the emulsifier can provide a strong binding strength after film formation, and the emulsion gelatine has a good dispersity, which can further improve the dispersity and dynamics of the binder.

In one embodiment of this application, the mass percentage of the emulsifier is 0.5% to 2% on the basis of the total mass of the first monomer, the second monomer, and the third monomer. The content of the emulsifier is within the described range, which is beneficial for improving the dispersity and binding strength of the binder.

In this application, the mixture can further include an initiator, and the initiator is an emulsion polymerization initiator. A person skilled in the art would have been able to make a selection according to actual needs, as long as the objective of this application can be achieved. Exemplarily, ammonium persulfate is employed as the initiator.

In this application, the copolymerization reaction of the mixture is an emulsion polymerization reaction. The reaction process in this application is not particularly limited, and a person skilled in the art would have been able to make a selection according to actual situations, as long as the objective of this application can be achieved. Exemplarily, the emulsion-polymerized reactants may be mixed and reacted for 3 hours to 10 hours under a condition of 40°C to 90°C and 0.6 MPa to 1.0 MPa, and after the reaction is stopped, alkali is added to adjust the pH of the reaction solution to 7 to 8, and then the mixture is filtered to obtain the binder.

In one embodiment of this application, the binder satisfies at least one of the following characteristics 1) to 6): 1) the binder has a glass transition temperature of 10°C to 70°C; 2) the binder has a crosslinking degree of 10% to 80%; 3) the binder has a swelling degree of 30% to 150% in an electrolytic solution; 4) the binder is distributed discretely in a negative electrode plate, and the average diameter of each point in the discrete distribution is 100 nm to 300 nm; 5) the tensile strength of a binder film of the binder is 5 MPa to 30 MPa; and 6) the elongation at break of the binder film of the binder is 50% to 300%. The binder satisfies any one of the described characteristics 1) to 6). Applying the binder to a negative electrode plate can improve the structural stability of the negative electrode plate, and is beneficial for improving the cycle performance and expansion performance of an electrochemical apparatus.

In this application, the discrete distribution means that the binder emulsion particles on the negative electrode active material particles can be dispersed in the form of single particle points, and can also be dispersed in the form of small-sized clusters. In the discrete distribution, the diameter of single particle points is 100 nm-250 nm, and the average diameter of clusters of small-sized clusters is 250 nm-300 nm, as shown in Fig. 2, in which the dark part is binder particles.

In this application, the viscosity of the binder ranges from 10 mPa's to 1000 mPa s. The viscosity range of the binder is within the described range, and applying same to the negative electrode plate can improve the structural stability of the negative electrode plate, thereby improving the cycle performance and expansion performance of the electrochemical apparatus.

A second aspect of this application provides a negative electrode plate, including a negative electrode current collector and a negative electrode active material layer provided on at least one surface of the negative electrode current collector, in which the negative electrode active material layer includes a negative electrode active material and a binder provided in the first aspect of this application. The negative electrode plate provided in this application includes the binder provided in the first aspect of this application, and has good structural stability, thereby improving the cycle performance and expansion performance of an electrochemical apparatus.

In one embodiment of this application, the mass percentage of the binder is 1% to 10% on the basis of the mass of the negative electrode active material layer. The content of the binder is within the described range, which is beneficial for improving the structural stability of the negative electrode plate.

In one embodiment of this application, the negative electrode active material includes at least one of graphite, hard carbon, silicon, silicon carbon, or silicon oxide. By selecting the described negative electrode active material, the obtained negative electrode plate has good structural stability, thereby improving the cycle performance and expansion performance of the electrochemical apparatus.

The average particle size of the negative electrode active material in this application is not particularly limited, as long as the objective of this application can be achieved. Exemplarily, the average particle size of the negative electrode active material is 5 µm to 20 µm.

In one embodiment of the application, the compaction density of the negative electrode active material layer is 1.45 g/cm³ to 1.85 g/cm³. The compaction density of the negative electrode active material layer is within the described range, which is beneficial for improving the structural stability of the negative electrode plate, thereby improving the cycle performance and expansion performance of the electrochemical apparatus.

In one embodiment of this application, the negative electrode plate satisfies at least one of the following characteristics a) and b): a) the ionic resistance of the negative electrode plate is 4 mΩ to 20 mΩ; and b) a binding strength of the negative electrode active material layer is 10 N/m to 200 N/m. The smaller the ionic resistance of the negative electrode plate is, the larger the charging ratio of the electrochemical apparatus is, and the faster the charging rate is. The ionic resistance of the negative electrode plate provided in this application is within the range of characteristic a), which is beneficial for improving the charging rate of the electrochemical apparatus. The binding strength of the negative electrode active material layer is within the range of characteristic b), which is beneficial for improving the cycle performance and expansion performance of the electrochemical apparatus.

A third aspect of this application provides an electrochemical apparatus, including the negative electrode plate provided in the second aspect of this application. The negative electrode plate provided in this application has good structural stability, so that the electrochemical apparatus provided in this application has good cycle performance and expansion performance.

The electrochemical apparatus of this application is not particularly limited, and may include any apparatus that undergoes an electrochemical reaction. In some embodiments of this application, the electrochemical apparatus of this application includes, but is not limited to, a lithium metal secondary battery, a lithium ion secondary battery (lithium ion battery), a lithium polymer secondary battery, a lithium ion polymer secondary battery. etc. In some embodiments of this application, the lithium ion battery structure of this application includes, but is not limited to, a winding structure, a laminating structure, a multi-tab structure, etc. The lithium ion battery structure of this application includes, but is not limited to, a soft pack lithium ion battery, a square aluminum housing battery, a cylindrical aluminum housing battery, etc.

This application has no particular limitation on the negative electrode current collector, as long as the objective of this application can be achieved. For example, the negative electrode current collector may contain a copper foil, a copper alloy foil, a nickel foil, a stainless steel foil, a titanium foil, a nickel foam, a copper foam, a composite current collector, etc. The thickness of the negative electrode current collector in this application is not particularly limited, as long as the objective of this application can be achieved. The thickness of the negative electrode current collector is 4 µm to 10 µm, for example.

In this application, the negative electrode active material layer may be provided on a surface in the thickness direction of the negative electrode current collector, and may also be provided on both surfaces in the thickness direction of the negative electrode current collector. It should be noted that, the "surface" herein may be all of the region of the negative electrode current collector, and may also be a partial region of the negative electrode current collector, which is not particularly limited in this application, as long as the objective of this application can be achieved.

This application has no particular limitation on the positive electrode current collector, as long as the objective of this application can be achieved. For example, the positive electrode current collector may include an aluminum foil, an aluminum alloy foil, a composite current collector, etc. The thickness of the positive electrode current collector and the positive electrode active material layer is not particularly limited in this application, as long as the objective of this application can be achieved. The thickness of the positive electrode current collector is 5 µm to 20 µm, for example.

The positive electrode active material layer in this application may include a positive electrode active material. The type of the positive electrode active material is not particularly limited in this application, as long as the objective of this application can be achieved. For example, the positive electrode active material may contain at least one of lithium nickel cobalt manganate, lithium nickel cobalt aluminate, lithium iron phosphate, a lithium-rich manganesebased material, lithium cobalt oxide, lithium manganate, lithium manganese iron phosphate, lithium titanate, etc.

In this application, the positive electrode active material layer can further include a positive electrode binder. The positive electrode binder is not particularly limited in this application, as long as the objective of this application can be achieved, for example, the positive electrode binder can include, but is not limited to, at least one of polyvinylidene difluoride, polyvinyl alcohol, carboxymethyl cellulose, hydroxypropyl cellulose, diacetyl cellulose, polyvinyl chloride, carboxylated polyvinyl chloride, polyvinyl pyrrolidone, polyurethane, polytetrafluoroethylene, polyethylene, polypropylene, styrene butadiene rubber, acrylic acid (ester)-esterified styrene butadiene rubber or epoxy resin.

In this application, the positive electrode active material layer may be provided on a surface in the thickness direction of the positive electrode current collector, and may also be provided on two surfaces in the thickness direction of the positive electrode current collector. It should be noted that, the "surface‴ herein may be all of the region of the positive electrode current collector, or may be a partial region of the positive electrode current collector, which is not particularly limited in this application, as long as the objective of this application can be achieved.

This application does not specifically limit a separator and an electrolytic solution, and a person skilled in the art would have been able to make a selection according to actual situations, as long as the objective of this application can be achieved.

A fourth aspect of this application provides an electronic apparatus, including the electrochemical apparatus provided in the third aspect of this application. The electrochemical apparatus provided in this application has good cycle performance and expansion performance, and thus the electronic apparatus provided in this application has good cycle performance and expansion performance.

The electronic apparatus of this application is not particularly limited, and may be any electronic apparatus known in the prior art. In some embodiments, the electronic apparatus may include, but is not limited to, a notebook computer, a pen-input computer, a mobile computer, an e-book player, a portable telephone, a portable fax machine, a portable copier, a portable printer, a headset stereo, a video camera, a liquid crystal television, a handheld cleaner, a portable CD player, a mini-optical disk, a transceiver, a digital diary, a calculator, a memory card, a portable audio recorder, a radio, a backup power supply, a motor, an automobile, a motorcycle, a power assisted bicycle, a bicycle, a lighting appliance, a toy, a game machine, a clock, an electric tool, a flashlight, a camera, a home large battery, or a lithium ion capacitor, etc.

### EMBODIMENTS

Hereinafter, embodements of the this application will be described more specifically with reference to embodiments and comparative embodiments. Various tests and evaluations are performed according to the following methods. Unless otherwise specified, "part" and "%" are on a mass basis.

### Test Methods and Device:

### Glass Transition Temperature Test:

The glass transition temperature (Tg) of the binder is measured by a differential scanning calorimetry (DSC), a sample of 5 mg of the binder is taken and heated from -20°C to 150°C at a heating rate of 5°C/min, and the measured DSC curve is analyzed to determine Tg of the binder.

### Crosslinking Degree Test:

A soaking dissolution method is used to test the crosslinking degree of a binder film of the binder, a sample of 1 g of the binder film of the binder is taken and soaked in an acetone or carbon tetrachloride solvent for 7 days (d), then the sample is taken out, dried and weighed to obtain the mass (w1) of the soaked sample, and the crosslinking degree is calculated according to the change in the weight before and after soaking, then the crosslinking degree = w1 × 100%.

### Test of Swelling Degree:

The binder film of the binder is cut into a sample of 10 mm × 20 mm, the mass (w0) of the sample before soaking is weighed, then the sample is soaked in an electrolytic solution at 60°C for 48 hours (h), the solvent on the surface of the sample is wiped to weigh the mass (w₂) of the sample after swelling, and each sample is weighed for three times during test, then the swelling degree = (w₂ - w₀)/w₀ × 100%,

in which an organic solvent of the electrolytic solution is ethylene carbonate (EC), propylene carbonate (PC), diethyl carbonate (DEC) and ethyl propionate (EP), the mass ratio EC:PC:DEC:EP = 3:1:3:3, the solute is lithium hexafluorophosphate (LiPF₆), and the concentration of LiPF₆ is 1 mol/L.

### Distribution Test of Binder on Graphite/Silicon Particle Surface:

the binder state on the surface of graphite/silicon particles in a negative electrode plate is observed by means of the SEM, in which emulsion binder particles are dispersed in the form of single particle points or in the form of clusters of a small size (the average diameter of each point is 100 nm-300 nm), and the film forming characteristic thereof is discrete distribution, which is denoted as discrete; the emulsion binder particles are agglomerated into clusters and distributed in clusters, the size of each clusters is greater than 300 nm, and the film forming characteristic thereof is denoted as clusters. In addition, the diameters of 20 particle points are counted, and the average diameter is calculated and denoted as the diameter of the film-forming particle points.

### Particle Size Test:

The average particle size (D50) of the binder emulsion is measured by a laser particle size analyzer.

### Test of Tensile Strength and Elongation at Break:

The tensile strength and elongation at break of the binder film of the binder are tested by a universal testing machine. A binder film with a width of 15 mm and a thickness of 0.3 mm (performing drying at 120°C to form a film) is prepared for testing in a tensile mode.

Test step: fixing an initial distance L₀ between upper and lower clamps, i.e. an initial length L₀ of a sample, the upper clamp performing stretching at a constant rate of 50 mm/min until the sample breaks, recording a maximum load F when the sample breaks, and the distance between the upper and lower clamps when the sample breaks being L₁, then: the tensile strength = F/(15 × 0.3), and the elongation at break = (L₁ - L₀)/L₀ × 100%.

### Ionic Resistance Test:

Symmetric batteries are fabricated with negative electrode plates and the electrochemical alternating current impedance spectroscopy (EIS) is tested using a Bio-Logic VMP3 electrochemical workstation. The test frequency ranges from 30 mHz to 500 kHz, the amplitude is 5 mV, and a Nyquist spectrogram is obtained by means of the test. The curve of the spectrogram is a semicircle, and the magnitude of the impedance value corresponding to the diameter thereof is the ionic impedance of the negative electrode plate of the battery.

### Binding Strength Test GB/T 2792-2014

A negative electrode plate is placed in an oven at 60°C for 15h for drying, is cut into strip-shaped samples of 1.5 cm × 110 cm, the samples are adhered to a steel plate of 3 cm × 15 cm by means of a double-sided binder tape and are rolled using a small roller for eight times, the steel plate is fixed in a lower clamp of a tensile machine, the upper clamp clamps a sample, and stretches same by 50 mm at a constant rate of 50 mm/min, in which the angle between the part of the sample pulled up and the steel plate is 180 degrees in space, and the average value of the tensile force of the plateau region finally measured is denoted as the binding strength of the negative electrode active material layer.

### Test of Cycle Performance and Expansion Performance of Lithium Ion Battery:

the lithium ion battery is placed in a constant temperature environment at 25°C, is charged at a constant current of 0.5C to 4.45 V, then is charged at a constant voltage until the current is 0.025 C, after standing for 5 minutes, the battery is discharged at a constant current of 0.5 C to 3 V, the capacity obtained in this step is taken as an initial capacity, and the initial thickness of the lithium ion battery is recorded, which is denoted as the initial thickness. After the test is repeated 800 times by performing charging at 0.5 C/discharging at 0.5 C, the cycle capacity and expansion thickness of the lithium ion battery after the cycle are recorded after the battery is charged at 0.5 C, the cycle capacity retention rate and the cycle expansion rate of the lithium ion battery are calculated, and are used as indexes for evaluating the cycle performance and the expansion performance of the lithium ion battery, in which the capacity retention rate = (cycle capacity - initial capacity)/initial capacity × 100%, and the cycle expansion rate = (expansion thickness - initial thickness)/initial thickness × 100%.

### Embodiment 1-1

### <Preparation of Binder>

Preparation of a binder includes: mixing a first monomer of butadiene, a second monomer of styrene, a crosslinking monomer of triethyleneglycol diacrylate (TEGDA), and an emulsifier of dehydrated sorbitan monooleate (M-201) in a mass ratio of 25:75:2:1 to obtain a mixture, adding the mixture and an initiator of ammonium persulfate (0.5% based on the total mass of the mixture) to deionized water of an equivalent amount with the mixture, so as to obtain a reaction solution of the emulsion polymerization reaction, and then subjecting the reaction solution to free radical emulsion polymerization at 70°C under 0.8 MPa, stopping the reaction after 7 hours, and then adding alkali to adjust the pH of the reaction solution to 8, such that a binder emulsion with a solid content of 50 wt% is obtained by filtering, and the average particle size of the binder emulsion is measured to be 270 nm.

### <Preparation of Negative Electrode Plate>

A negative electrode active material, i.e. graphite, silicon, conductive carbon black, and the binder prepared in this embodiment are mixed according to a mass ratio of 92:4:2:2, deionized water is then added as a solvent, and a negative electrode slurry with a solid content of 70 wt% is formulated and stirred evenly. The negative electrode slurry is evenly coated on a surface of a copper foil of a negative electrode current collector with the thickness of 10 µm, and is dried at a temperature of 110°C so as to obtain a negative electrode plate coated with a negative electrode active material on a side with the thickness of 150 µm; and then the described steps are repeated on the other surface of the negative electrode plate to obtain a negative electrode plate coated with a negative electrode active material on both sides. After the coating is completed, the negative electrode plate is cold-pressed and cut into a plate with a size of 78 mm × 875 mm for use. The compaction density of the negative electrode s plate is 1.7 g/cm³.

### <Preparation of Positive Electrode Plate>

A positive electrode active material of lithium cobalt oxide (LiCoO2) , a conductive agent of conductive carbon black (Super P), and polyvinylidene fluoride (PVDF) are mixed according to a mass ratio of 97:1.4:1.6, and N-methyl pyrrolidone (NMP) is added as a solvent, so as to formulate a slurry with a solid content of 75 wt%, and stir same evenly. The positive electrode slurry is evenly coated on a surface of an aluminium foil of a positive electrode current collector with the thickness of 10 µm, and is dried at 110°C, so as to obtain a positive electrode plate with a positive electrode active material layer with the thickness of 110 µm and with a side coated with the positive electrode active material. After that, the described steps are repeated on the other surface of the positive electrode plate to obtain a positive electrode plate on which the positive electrode active material is coated on both sides. After the coating is completed, the positive electrode plate is cold-pressed and cut into a plate with a size 74 mm 867 mm for use. The compaction density of the positive electrode plate is 4.15 g/cm³.

### <Preparation of Electrolytic Solution>

In a glove box with a dry argon atmosphere, ethylene carbonate (EC), propylene carbonate (PC), diethyl carbonate (DEC) and ethyl propionate (EP), which are organic solvents, are mixed at a mass ratio of EC:PC:DEC:EP = 3:1:3:3, and then lithium hexafluorophosphate lithium salt (LiPF₆) is added into the organic solvent, dissolved and mixed uniformly, so as to obtain an electrolytic solution with a lithium salt concentration of 1 mol/L.

### <Preparation of Separator>

A polyethylene film (supplied by Celgard) having a thickness of 15 µm is used.

### <Preparation of Lithium Ion Battery>

The positive electrode plate, the separator, and the negative electrode plate prepared in the described steps are stacked in sequence, so that the separator is located between the positive electrode plate and the negative electrode plate to achieve a separation function, and then the electrode assembly is obtained by winding. After welding tabs, the electrode assembly is loaded into an aluminium plastic film packaging shell, placed in a vacuum oven at 85°C and dried for 12 hours to remove moisture, and the prepared electrolytic solution is injected, and the lithium ion battery is obtained by means of processes such as vacuum packaging, standing, forming (performing charging at a constant current of 0.02 C to 3.5V , and then performing charging at a constant current of 0.1 C to 3.9 V), shaping, and capacity testing.

### Embodiments 1-2 to Embodiments 1-12

Except for adjusting the binder composition according to table 1, the remaining parts are the same as those in embodiment 1-1.

### Embodiments 2-1 to Embodiments 2-4

Except for adjusting parameters according to table 2, the remaining parts are the same as those in embodiment 1-1.

### Comparative Embodiments 1-1 to 1-3

Except for adjusting parameters according to table 1, the remaining parts are the same as those in embodiment 1-1.

Relevant preparation parameters and performance tests for the embodiments and comparative embodiments are shown in tables 1-2.

**Table 1**

| | Binder composition | | | | | | | Binder characteristic | | | | | Negative electrode plate characteristic | | | | Battery test | |
|---|---|---|---|---|---|---|---|---|---|---|---|---|---|---|---|---|---|---|
| | Butadiene | Styrene | Third monomer | | Crosslin king monome r | Emulsifier | | Crosslin king degree | Tg /°C | Tensile strength/ MPa | Elongati on at break | Swelling degree | Diameter of film-forming particle point/nm | Film forming characte ristic | Ionic resistanc e/mΩ | Binding strength/ (N/m) | Cycle expansio n rate | Capacity retention rate |
| | | | Acrylic acid | Acryloni trile | TEGDA | Sodium dodecyl sulfonat e | M-201 | | | | | | | | | | | |
| Embodiment 1-1 | 25% | 75% | 0% | 0% | 2.0% | 0% | 1.0% | 42% | 30 | 19 | 110% | 60% | 270 | Discrete | 18 | 22 | 9.5% | 93.5% |
| Embodiment 1-2 | 15% | 85% | 0% | 0% | 2.0% | 0% | 1.0% | 40% | 65 | 24 | 74% | 20% | 210 | Discrete | 18 | 24 | 9.4% | 93.1% |
| Embodiment 1-3 | 35% | 65% | 0% | 0% | 2.0% | 0% | 1.0% | 43% | 20 | 14 | 210% | 90% | 290 | Discrete | 20 | 25 | 9.3% | 93.0% |
| Embodiment 1-4 | 25% | 70% | 5% | 0.0% | 2.0% | 0% | 1.0% | 45% | 37 | 25 | 90% | 29% | 260 | Discrete | 19 | 26 | 9.7% | 93.2% |
| Embodiment 1-5 | 25% | 65% | 10% | 0.0% | 2.0% | 0% | 1.0% | 54% | 37 | 24 | 78% | 39% | 250 | Discrete | 17 | 28 | 9.2% | 94.1% |
| Embodiment 1-6 | 25% | 70% | 0.0% | 5% | 2.0% | 0% | 1.0% | 45% | 36 | 26 | 90% | 33% | 210 | Discrete | 17 | 26 | 9.7% | 93.2% |
| Embodiment 1-7 | 20% | 65% | 0.0% | 15% | 2.0% | 0% | 1.0% | 54% | 50 | 25 | 78% | 41% | 240 | Discrete | 20 | 31 | 9.2% | 93.0% |
| Embodiment 1-8 | 25% | 75% | 0% | 0% | 0.5% | 0% | 1.0% | 30% | 21 | 15 | 190% | 70% | 300 | Discrete | 20 | 20 | 9.6% | 93.2% |
| Embodiment 1-9 | 25% | 75% | 0% | 0% | 2.5% | 0% | 1.0% | 70% | 41 | 23 | 80% | 50% | 260 | Discrete | 17 | 25 | 9.8% | 93.2% |
| Embodiment 1-10 | 25% | 75% | 0% | 0% | 3.0% | 0% | 1.0% | 85% | 55 | 28 | 50% | 20% | 250 | Discrete | 16 | 25 | 9.3% | 93.0% |
| Embodiment 1-11 | 25% | 75% | 0% | 0% | 2.0% | 0% | 0.5% | 43% | 36 | 16 | 105% | 55% | 300 | Discrete | 20 | 19 | 9.1% | 94.1% |
| Embodiment 1-12 | 25% | 75% | 0% | 0% | 2.0% | 0% | 2.0% | 31% | 18 | 19 | 123% | 58% | 150 | Discrete | 15 | 27 | 9.5% | 93.5% |
| Comparative embodiment 1-1 | 25% | 75% | 0% | 0% | 0% | 0% | 1.0% | 0% | 16 | 5 | 290% | 130% | 500 | Cluster | 23 | 18 | 11.6% | 89.2% |
| Comparative embodiment 1-2 | 25% | 75% | 0% | 0% | 0% | 1.0% | 0% | 0% | 16 | 13 | 270% | 90% | 600 | Cluster | 22 | 14 | 11.0% | 88.2% |
| Comparative embodiment 1-3 | 25% | 75% | 0% | 0% | 2.0% | 1.0% | 0% | 40% | 36 | 19 | 101% | 60% | 400 | Cluster | 23 | 13 | 10.4% | 89.3% |

**Table 2**

| Embodiment | Negative electrode plate design | | Negative electrode plate characteristic | | | | Battery test | |
|---|---|---|---|---|---|---|---|---|
| | Binder content | Compaction density/(g/cm³) | Diameter of film-forming particle point/nm | Film forming characteristic | Ionic resistance/mΩ | Binding strength/(N/m) | Cycle expansion rate | Capacity retention rate |
| 1-1 | 2% | 1.7 | 270 | Discrete | 18 | 22 | 9.5% | 93.5% |
| 2-1 | 1% | 1.7 | 230 | Discrete | 10 | 16 | 10.7% | 91.2% |
| 2-2 | 10% | 1.7 | 290 | Discrete | 100 | 180 | 8.7% | 91.4% |
| 2-3 | 2% | 1.45 | 280 | Discrete | 12 | 18 | 8.1% | 92.2% |
| 2-4 | 2% | 1.85 | 280 | Discrete | 25 | 29 | 10.9% | 92.5% |

Fig. 2 is the SEM photo of the distribution of the binder prepared in embodiment 1-1 of this application on the graphite surface. It can be determined from Fig. 2 that the binder provided in this application is distributed discretely in the form of single particles and small-sized clusters when the film is formed on the graphite surface, and is evenly dispersed.

From embodiment 1-1 to embodiment 1-3, it can be determined that as the content of the first monomer increases and the content of the second monomer decreases, the elongation at break and the swelling degree significantly increase, and Tg and the tensile strength decrease, i.e. the first monomer provides high toughness for the binder, and the second monomer provides high strength and high Tg for the binder. In embodiments 1-4 to 1-7, with the increase of the content of the third monomer, i.e. acrylic acid or acrylonitrile, the binding strength of the negative electrode active material layer is increased, and with the increase of the content of acrylic acid, the ionic resistance is decreased, and the dispersity of the emulsion is improved, so that the binder is distributed discretely when the film is formed. When the contents of the first monomer, the second monomer, the third monomer, the crosslinking monomer and the emulsifier are within the ranges of this application, the obtained binder is distributed discretely and evenly dispersed when the film is formed on the graphite surface, the binding strength of the negative electrode active material layer is improved, and the obtained lithium ion battery has good cycle performance and expansion performance.

In comparative embodiments 1-1 and 1-2, the crosslinking degree of a binder not containing a crosslinking monomer is 0, and no crosslinking monomer is used to provide a crosslinking structure. In the negative electrode plate prepared in comparative embodiments 1-1 and 1-2, the binding strength of the negative electrode active material layer is lower than that of the binder provided in the embodiments of this application, which is unfavorable for the stability of the structure of the negative electrode plate, and thus the cycle performance and the expansion performance of the lithium ion battery cannot be improved.

The crosslinking monomer provides a crosslinking structure, so as to improve Tg, and reduce migration film formation of molecular chains. It can be determined from embodiments 1-1 and 1-8 to embodiments 1-10 that the content of the crosslinking monomer is within the scope of this application, the obtained binder is discretely distributed when the film is formed on a graphite surface, the binding strength of the negative electrode active material layer is improved, and the obtained lithium ion battery has good cycle performance and expansion performance.

It can be determined from embodiments 1-1 and 1-11 to embodiments 1-12 that the increase of the content of the emulsifier and the reduction of the diameter of the film-forming particle points of the binder facilitate the discrete distribution and film formation, thereby improving the binding strength of the negative electrode active material layer. The content of the emulsifier is within the range of this application, and the prepared binder can improve the binding strength of the negative electrode active material layer, thereby improving the cycle performance and expansion performance of the lithium ion battery. In addition, the content of the emulsifier is within the range of this application, the diameter of the film-forming particle points of the binder is small, the coverage area thereof on the surface of the active substance is small, the ionic resistance of the obtained negative electrode plate is also small, and furthermore, the fast charging performance of the lithium ion battery can be improved.

In comparative embodiments 1-2 and 1-3, the added emulsifier is sodium dodecyl sulfonate, which is not within the range of the emulsifier provided in this application, and the diameter of the film-forming particle points thereof is greater than 300 nm, and the particle points are distributed in clusters. The binders prepared in comparative embodiments 1-2 and 1-3 are applied to a negative electrode plate, the ionic resistance of the negative electrode plate is higher than that of the embodiments of this application, and the binding strength of the negative electrode active material layer is much lower than that of the embodiments of this application, such that the fast charging performance, cycle performance and expansion performance of the lithium ion battery cannot be improved.

It can be determined from embodiments 1-1 and 2-1 to embodiment 2-2 that the content of the binder in the negative electrode plate is within the range of this application, so that the structural stability of the negative electrode plate can be effectively improved, thereby improving the cycle performance and expansion performance of the lithium ion battery.

It can be determined from embodiments 1-1 and 2-3 to embodiment 2-4 that, in the negative electrode plate, the compaction density of the negative electrode active material layer is within the range of this application, and the binder provided in this application can effectively improve the structural stability of the negative electrode plate, thereby improving the cycle performance and expansion performance of the lithium ion battery.

By applying the binder provided in this application to the negative electrode plate, the structural stability of the negative electrode plate can be improved, thereby improving the charging rate of the lithium ion battery and prolonging the cycle life. When the lithium ion battery provided by this application is cycled for 800 times at 25°C, the cycle expansion rate is less than 10%, and the capacity retention rates are all greater than 90%, thereby effectively improving the cycle performance and expansion performance of the lithium ion battery.

The descriptions above are merely preferred embodiments of this application, which are not intended to limit this application. Any modification, equivalent replacement, or improvement made within the spirit and principle of this application shall fall within the protection scope of this application.

## Claims

1. A binder, comprising a copolymer, wherein the copolymer is obtained by copolymerization of a mixture, the mixture comprises a first monomer of butadiene, a second monomer of styrene, a third monomer, a crosslinking monomer, and an emulsifier; the third monomer comprises at least one of (meth)acrylate, acrylonitrile, acrylic acid, a derivative of (meth)acrylate, a derivative of acrylonitrile or a derivative of acrylic acid; and the crosslinking monomer comprises at least one of triethyleneglycol diacrylate, N, N-methylenebisacrylamide, ethylene glycol diacrylate, or ethylene glycol dimethacrylate.

2. The binder according to claim 1, wherein a mass ratio of the first monomer, the second monomer, and the third monomer is (15% to 35%): (60% to 85%): (0% to 15%); and on the basis of a total mass of the first monomer, the second monomer, and the third monomer, a mass percentage of the crosslinking monomer is 0.5% to 3%.

3. The binder according to claim 1, wherein the emulsifier comprises at least one of dehydrated sorbitan monooleate, sorbitan monooleate, a dichlorinated-N, N'-bis(3-abietanoyloxy-2-hydroxypropyl) tetraethylene glycol bis(2-hydroxypropylamine), an alkoxylated alcohol, or a fatty acid polyol ester.

4. The binder according to claim 1, wherein a mass percentage of the emulsifier is 0.5% to 2% on the basis of the total mass of the first monomer, the second monomer, and the third monomer.

5. The binder according to claim 1, wherein the binder satisfies at least one of the following characteristics 1) to 6):
1) the binder has a glass transition temperature of 10°C to 70°C;
2) the binder has a crosslinking degree of 10% to 80%;
3) the binder has a swelling degree of 30% to 150% in an electrolytic solution;
4) the binder is distributed discretely in a negative electrode plate, and a average diameter of each point in the discrete distribution is 100 nm to 300 nm;
5) a tensile strength of a binder film of the binder is 5 MPa to 30 MPa; and
6) an elongation at break of the binder film of the binder is 50% to 300%.

6. A negative electrode plate, comprising a negative electrode current collector and a negative electrode active material layer provided on at least one surface of the negative electrode current collector, the negative electrode active material layer comprising a negative electrode active material and the binder according to any one of claims 1 to 5.

7. The negative electrode plate according to claim 6, wherein a mass percentage of the binder is 1% to 10% on the basis of a mass of the negative electrode active material layer.

8. The negative electrode plate according to claim 6, wherein the negative electrode active material comprises at least one of graphite, hard carbon, silicon, silicon carbon, or silicon oxide.

9. The negative electrode plate according to claim 6, wherein a compaction density of the negative electrode active material layer is 1.45 g/cm³ to 1.85 g/cm³.

10. The negative electrode plate according to any one of claims 6 to 9, wherein the negative electrode plate satisfies at least one of the following characteristics a) or b):
a) an ionic resistance of the negative electrode plate is 4 mΩ to 20 mΩ; or
b) a binding strength of the negative electrode active material layer is 10 N/m to 200 N/m.

11. An electrochemical apparatus, comprising the negative electrode plate of any one of claims 6 to 10.

12. An electronic apparatus, comprising the electrochemical apparatus of claim 11.
